# EUROPÄISCHE PATENTSCHRIFT

(11) **EP 1 499 484 B1**
(45) Veröffentlichungstag und Bekanntmachung des Hinweises auf die Patenterteilung: **02.07.2008**
(21) Anmeldenummer: 03717302.8
(22) Anmeldetag: 15.04.2003
(51) Int. Cl.: B29B 9/12, B29B 9/14, B01J 2/00, B29C 47/38, C08L 23/06

(54) **VERFAHREN ZUR HERSTELLUNG GEFÜLLTER GRANULATE AUS POLYETHYLENEN HOHEN BZW. ULTRAHOHEN MOLEKULARGEWICHTS**
METHOD FOR PRODUCING FILLED GRANULATES CONSISTING OF HIGH OR ULTRA-HIGH MOLECULAR WEIGHT POLYETHYLENES
PROCEDE DE PRODUCTION DE GRANULES CHARGEES COMPRENANT DES POLYETHYLENES A MASSE MOLECULAIRE ELEVEE OU BIEN ULTRA-ELEVEE

(30) Priorität: 18.04.2002 DE 10217232
(43) Veröffentlichungstag der Anmeldung: 26.01.2005
(73) Patentinhaber: Ticona GmbH, 65451 Kelsterbach (DE)
(72) Erfinder: GUSIK, Meinhard, 46147 Oberhausen (DE); HAFTKA, Stanislaw, 46145 Oberhausen (DE); LÜDTKE, Kerstin, 46499 Hamminkeln (DE)
(86) Internationale Anmeldenummer: PCT/EP2003/003903
(87) Internationale Veröffentlichungsnummer: WO 2003/086724

(56) Entgegenhaltungen:
- EP-A- 0 315 481
- EP-A- 0 472 237
- EP-A- 0 590 507
- EP-A- 0 690 095
- EP-A- 0 889 087
- US-A- 4 853 427
- US-A- 4 973 626
- US-A- 5 055 248
- US-A- 5 352 732
- US-A- 5 948 557
- US-A1- 2002 010 241

## Beschreibung

Die vorliegende Erfindung betrifft ein Verfahren zur Herstellung von Granulaten aus additivierten (ultra)hochmolekularen Polyethylenen.

Polyethylene hohen und ultrahohen Molekulargewichts (nachstehend auch "HMW-PE" oder "HMW-Polyethylen" bzw. "UHMW-PE" oder "UHMW-Polyethylen" genannt), werden wegen ihrer hervorragenden Eigenschaften, wie hoher Abriebfestigkeit, gutem Reibungsverhalten, ausgezeichnetem Zähigkeitsverhalten und hoher Chemikalienbeständigkeit in vielen Gebieten der Technik eingesetzt. Aufgrund seines günstigen mechanischen, thermischen und chemischen Verhaltens haben HMW-PE und UHMW-PE in den verschiedensten Anwendungsgebieten Eingang als vielseitiger Werkstoff gefunden. Als Beispiele seien genannt die Textilindustrie, der Maschinenbau, die chemische Industrie und die Fördertechnik. Diese Polymeren ultrahohen Molekulargewichts sind zwar Thermoplaste, lassen sich aber auf den üblichen für die Verarbeitung von Thermoplasten geeigneten Vorrichtungen nicht ohne spezielle Maßnahmen und/oder nur unter Zusatz von Hilfsmitteln verarbeiten.

So beschreibt die EP-A-889,087 eine Formmasse, die neben UHMW-PE ein Polyethylen hoher Dichte, ein Antioxidans, ein Fettsäuresalz, ein Amidwachs und als weitere Blendkomponente ein Fluorelastomer aufweist. Diese Formmasse lässt sich durch Extrusion auf üblichen Vorrichtungen verarbeiten. In der US-A-5,352,732 wird eine Formmasse beschrieben, die sich zu homogenen Kompositen aus UHMW-PE und Füllmaterialien verarbeiten lässt. Dabei wird ein UHMW-PE mit einer bimodalen Molekulargewichtsverteilung eingesetzt.

Die EP-A1-0 690 095 offenbart Polyethylenformassen, enthaltend Polyethylen und Ruß und übliche Zusätze die durch verschiedene thermische Verfahren verarbeitet werden können.

Ein anderer Ansatz zur Verarbeitung von UHMW-PE besteht darin, spezielle Vorrichtungen und/oder spezielle Verarbeitungsbedingungen einzusetzen. So beschreibt die EP-A-190,878 die Herstellung von extrudierten und verstreckten Filamenten aus UHMW-PE unter Einsatz eines speziellen Einschneckenextruders.

Aus der FR-A-2,669,260 ist eine speziell ausgestaltete Extruderschnecke bekannt, die sich zur Verarbeitung von UHMW-PE einsetzen lässt. Eine weitere Vorrichtung sowie ein Verfahren zur Extrusion von UHMW-PE ist aus der EP-A-590,507 bekannt. Dabei kommt ein speziell ausgestalteter Zweischneckenextruder zum Einsatz. Mit dieser Vorrichtung lassen sich die Polymerisate schonend verarbeiten und man erhält Profile mit einwandfreien Oberflächen, die frei von Poren und Lunkern sind und keine innere Spannungen aufweisen.

Granulate aus Polymeren sind in vielen Gebieten der Kunststoffverarbeitung eingeführt. Sie eignen sich wegen ihrer guten Dosier- und Verarbeitungs-eigenschaften zur einfachen Herstellung von Mischungen und als Vorprodukte zur Herstellung von Formlingen, beispielsweise im Spritzgussverfahren. Die Vorteile von Granulaten resultieren daraus, dass der Verwendungsmöglichkeiten von Werkstoffen manchmal dadurch Grenzen gesetzt sind, dass ihre Verarbeitbarkeit aufgrund der vorwiegenden Lieferform in pulverförmigem oder feinteiligem Zustand Probleme bereitet. So sind bei der Spritzgießverarbeitung des ultrahochmolekularem Polyethylen-Pulvers Einzugsschwierigkeiten bei Spritzgieß- und Extruderzylindern bekannt, die z.B. nicht über eine für die Pulververarbeitung vorteilhafte gekühlte Nutbuchse verfügen. Außerdem führt die Handhabung von pulverförmigen bzw. feinteiligen ultrahochmolekularen Polyethylenen häufig zu Staubproblemen, was bezüglich der Produkthygiene, z.B. bei Spritzgieß- und Extrusionsbetrieben auf Ablehnung des Materials durch den Verarbeiter stoßen kann. Das Staubproblem der pulverförmigen oder feinteiligen ultrahochmolekularen Polyethylene erfordert bei geschlossenen Lager- und Fördersystemen (Siloantagen und Vorratsbehälter) wegen der Gefahr von Staubexplosionen entsprechende Sicherheitsausrüstungen zur Ableitung elektrostatischer Ladung, was bei Konzessionierung von Neuanlagen entsprechende Kosten verursacht. Auch bei der klassischen Verarbeitungstechnik des UHMW-PE mittels der Presssintertechnik führt die Pulverform beim Zufahren der Pressen zu dem bekannten "blow out" (dem Ausblasen von Pulverpartikeln in die Umgebung), was zu erheblichen Reinigungsarbeiten der gesamten Umgebung der Pressen führt. Abhilfe schafft hier dann nur ein langsames Zufahren der Pressen, um den Pulveraustrieb zu minimieren, was jedoch einen entsprechenden Zeitaufwand erfordert und letztlich einen Kapazitätsverlust der Pressen bedeutet.

Ferner kann die mangelhafte Rieselfähigkeit der UHMW-PE Pulver zu Produktionsstörungen bei der Verarbeitung mittels Spritzguss-, Ramextrusions- und Extrusionstechnik führen, da sich in den Vorratsbehältern durch Brückenbildungen Materialflussstaus einstellen können. Ebenfalls erlaubt es die schlechte Rieselfähigkeit von UHMW-PE Pulvern nicht, dass dünne Platten (< 8 mm Dicke, je nach Formengröße) mittels der Presstechnik direkt herstellbar sind, da sich das Pulver nur sehr schlecht gleichmäßig über die Formenfläche verteilen lässt und/oder beim Zufahren der Presse sich durch das schon erwähnte "blow out" Kanäle in der Pulverschicht bilden, die in der so gepressten Plätte dann zu Hohl- bzw. Einfallstellen und damit zum Ausschuss dieser Erzeugnisse führen kann.

Zur Abhilfe dieser Nachteile wurde bereits vorgeschlagen, aus dem Pulver kalt verpresste Pellets herzustellen (vergl. DE-A-4 210 351). Es hat sich jedoch herausgestellt, dass diese Pellets keine ausreichende Kornfestigkeit besitzen. Dieses hatte zur Folge, dass keine ausreichende Transportstabilität der Pellets erreicht wurde und dass ein erheblicher Teil der gepressten Pellets bei der Verarbeitung wieder zu Pulver zerfiel. Somit traten die oben aufgeführten Nachteile bei den Verarbeitungstechniken wieder auf. Außerdem erfordert die Herstellungstechnik der Pellets in Abhängigkeit der Modifizierung mit z.B. Farbpigmenten oder Füllstoffen, jeweils den Einsatz einer geeigneten, verschieden dicken Matrize, was zu enormen Kosten an Rüstzeiten führen kann.

Diese Probleme treten bei der Granulierung über die Schmelze nicht auf, da Zuschlagstoffe wie Pigmente, Additive und Füllstoffe ohne Änderungen des Maschinenaufbaues problemlos verarbeitet werden können.

Granulate enthaltend Polyethylene hohen oder ultrahohen Molekulargewichts und Füll- und/oder Verstärkungsstoffe sind bislang nicht beschrieben geworden.

Es wurde nun gefunden, dass mit Hilfe eines besonderen Extrusionsverfahrens die Herstellung von derartigen Granulaten möglich wird.

Die vorliegende Erfindung betrifft Granulate enthaltend Polyethylene hohen und/oder ultrahohen Molekulargewichts und Füllstoffe und/oder Verstärkungsstoffe.

Als Polyethylene hohen oder ultrahohen Molekulargewichts lassen sich beliebige Homo- und Copolymere einsetzen, sofern diese ein hohes bzw. ultrahohes Molekulargewicht aufweisen und sich von Ethylen als Monomer ableiten, das gegebenenfalls in Kombination mit weiteren ethylenisch ungesättigten Kohlenwasserstoffen oder deren Kombinationen eingesetzt wird.

Als HMW-PE bezeichnet man ein Polyethylen mit einem Molekulargewicht, gemessen viskosimetrisch, von mindestens 1 x10⁵ g/mol, vorzugsweise von 3 x 10⁵ bis 1 x 10⁶ g/mol. Unter UHMW-PE versteht man Polyethylene mit einem mittlerem Molekulargewicht, gemessen viskosimetrisch, von mindestens 1 x 10⁶ g/ Mol, vorzugsweise von 2,5 x 10⁶ bis 1,5 x 10⁷ g/mol. Die Methode zur viskosimetrischen Bestimmung des Molekulargewichtes ist zum Beispiel in CZ - Chemische Technik 4 (1974), 129 beschrieben.

Diese UHMW-Polyethylene können als Ausgangsprodukte zur Herstellung der erfindungsgemäßen Granulate in Partikelform verschiedenster Morphologie, insbesondere in Pulverform, vorliegen. Die erfindungsgemäß eingesetzten UHMW-Polyethylene weisen üblicherweise eine Partikelgröße D₅₀ von 1 bis 600 µm, vorzugsweise von 20 bis 300 µm, insbesondere von 30 - 200 µm auf.

Als Füllstoffe und/oder Verstärkungsstoffe können die erfindungsgemäßen Granulate die unterschiedlichsten Additive enthalten, die dem Weiterverarbeitungsprodukt gewünschte Eigenschaften verleihen. Dazu zählen beispielsweise Farbstoffe oder organische oder anorganische Pigmente, wie Azo- und Diazopigmente, Metallkomplexpigmente, Titandioxid, Eisenoxid, Chromoxid, Ultramarin Pigmente, Aluminiumsilikat-Pigmente oder Ruß; Antistatika, wie Ruß; Verstärkungsmittel, wie Fasern aus unterschiedlichsten Materialien, wie Glas, Kohlenstoff oder Metall; oder mineralische Füllstoffe, wie Calciumcarbonat, Kaolin, Tone, Titandioxid, AluminiumTrihydrat, Wollastonit, Talkum, Pyrophyllit, Quarz, Silikate, Bariumsulfat, Antimonoxid, Glimmer, Calciumsulfat, Magnesiumhydroxid oder Feldspat; synthetische Füllstoffe, wie Ruß, synthetische Silikate, feste und hohle Microsheres, auf Glas basierende Additive, metallische Additive, wie [Pulver, wie] Aluminium-, Eisen- oder Silberpulver, oder magnetische Additive.

Bevorzugte Füllstoffe sind Ruß, Graphit, Metallpulver, wie Aluminiumpulver, mineralische Pulver, wie Wollastonit, Verstärkungsfasern, wie Glas-, Kohlenstoff- oder Metallfasern einschließlich Whiskern, oder Glaskugeln.

Der Gehalt an Füll- und/oder Verstärkungsstoffen im erfindungsgemäßen Granulat beträgt üblicherweise bis zu 60 Gew.%, bezogen auf das Granulat. Bevorzugt wird ein Bereich von 0,1 bis 40 Gew.%.

Die erfindungsgemäßen Granulate können beliebige Form aufweisen, die durch die Art der Herstellung vorgegeben ist. So kann das Granulat beispielsweise scheibenförmig sein, wobei deren Kanten abgerundet sein können. Der Durchmesser der Granulatpartikel beträgt üblicherweise 0,5 bis 5 mm, insbesondere 1,5 bis 4 mm.

Die Herstellung des erfindungsgemäßen Granulates mit oder ohne Additive kann mit einer abgewandelten Vorrichtung gemäß EP-B-590,507 erfolgen.

Die Erfindung betrifft gemäß Anspruch 1 ein Verfahren zur Herstellung von Granulaten enthaltend HMW und/oder UHMW-Polyethylene und Füll- und/oder Verstärkungsstoffe mit Hilfe eines Extruders, vorzugsweise eines Einschneckenextruders, dessen Schneckenwelle in eine Einzugszone, eine Umwandlungszone und eine Ausstoßzone gegliedert ist.

Anstelle des oben beschriebenen Einschneckenextruders lassen sich auch entsprechend ausgestaltete Extrusionssysteme, wie Doppelschneckenextruder bzw. Planetwalzenextrusionssysteme einsetzen.

Das erfindungsgemäße Verfahren zeichnet sich durch den Einsatz eines speziell ausgestalten Extruders aus. Bei der Durchführung des Verfahrens sorgen die Schneckengeometrie, die Drehzahl und die Temperaturführung entlang der Schneckenzylinder dafür, dass es nicht zu einer thermischen Schädigung des Kunststoffes infolge Abbau oder Zersetzung, d.h. durch Spaltung der Molekülketten und damit zur Herabsetzung der mittleren Molmasse, kommt.

Die Förderung des UHMW-Polyethylens und der Additive durch den Extruder hindurch erfolgt üblicherweise bei Temperaturen von 110 bis 300°C, vorzugsweise von 130 bis 200°C. Die erforderliche Wärme kann dem Material auf zwei Wegen zugeführt werden, intern durch seine mechanische Beanspruchung als Reibungswärme und extern über Heizvorrichtungen.

Das so im Zylinder des Extruders erzeugte Extrudat wird mittels der Schnecke einer Lochscheibe zur Formung von Strängen zugeführt. Dabei hat es sich als vorteilhaft erwiesen, dass die Bohrungen der Lochscheibe bzw. die Zuführungen zur Lochscheibe im Übergangsstück direkt aus dem Schneckengang mit Extrudat gefüllt werden. Aufgrund der hohen Schmelzviskosität der UHMW-Polyethylene und der damit eingeschränkten Fließfähigkeit der Schmelze empfiehlt es sich, bei Benutzung eines Heißabschlagsystems mit einem vor der Lochscheibe zum Ablängen der Granulatgröße rotierenden Messerbalken, die Bohrungen gleichmäßig auf dem Umfang eines Lochkreises anzuordnen.

Die Dicke der Lochscheibe beträgt üblicherweise 5 bis 50 mm, bevorzugt 15 bis 40 mm und die Bohrungen haben Durchmesser von 0,5 bis 5,0 mm, insbesondere 1,5 bis 4,0 mm Durchmesser.

Zweckmäßig sind die Bohrungen mit konischen Einläufen ausgestattet, wobei der Einlaufwinkel 0,5 bis 5°, vorzugsweise 0,8 bis 1,5°, beträgt. Dadurch entsteht in der Bügelzone ein Druckanstieg, der durch entsprechende Einstellungen der Querschnittsgröße so bemessen wird, dass die Thermoplastpartikel zu einer homogenen Masse zusammensintern und die Formkörper eine glatte Oberfläche erhalten. Die aus der Lochscheibe austretenden Stränge können mit handelsüblichen Granuliervorrichtungen, wie Stranggranulatoren (auch Kaltabschlagverfahren genannt), Heißabschlaggranulatoren, Wasserring- bzw. Unterwassergranutatoren granuliert werden.

Nach dem erfindungsgemäßen Verfahren lassen sich unterschiedliche Typen HMW- bzw. UHMW-Polyethylene zusammen mit Füll- und/oder Verstärkungs-stoffen ebenso wie Mischungen aus verschiedenen Polyolefinen hohen und/oder ultrahohen Molekulargewichts zusammen mit Füll- und/oder Verstärkungsstoffen zu Granulat verarbeiten.

Neben HMW- und/oder UHMW-Polyethylenen können die erfindungsgemäßen Granulate weitere polymere Mischungsbestandteile enthalten. Beispiele dafür sind Polyethylene mit einer molaren Masse von etwa 10.000 bis etwa 600.000 g/mol.

Der Anteil dieser Polymeren in den Granulaten kann zwischen 1 und 90 Gew.%, vorzugsweise zwischen 10 bis 70 Gew.% liegen. Darüber hinaus kann das Polymerisat oder das Polymerisatgemisch Zusatzstoffe enthalten. Zu ihnen zählen z.B. übliche Verarbeitungshilfsmittel und Stabilisatoren wie Antistatika, Korrosionsschutzmittel, Licht- und Wärmestabilisatoren, wie UV-Stabilisatoren oder Antioxidantien.

Die erfindungsgemäßen Granulate lassen sich zu unterschiedlichen Formkörpern verarbeiten. Diesen können durch den Zusatz ausgewählter Füll- und/oder Verstärkungsstoffe gewünschte Eigenschaften verliehen werden. So führt beispielsweise der Zusatz von Glasfasern, Glaskugeln oder Wollastonit zu einer Erhöhung des E-Moduls und der Oberflächenhärte der aus diesem Granulat hergestellten Produkte. Diese Eigenschaften werden beispielsweise gefordert bei Einlauf- und Führungselementen in Verpackungs- und Abfüllanlagen, in der Transport-, Förder- und Lagertechnik und in der Papier- und Zellstoffindustrie.

Durch die Einlagerung von Ruß in HMW- bzw. UHMW-Polyethylene können Produkte antistatisch ausgerüstet werden. Weiterhin zeigen mit Ruß additivierte Produkte aus HMW- bzw. UHMW-Polyethylen eine verbesserte UV-Beständigkeit. Anwendung für diese Materialien sind Einlauf- und Führungselemente Einlauf- und Führungselementen in Verpackungs- und Abfüllanlagen, in der Transport-, Förder- und Lagertechnik, sowie im Sport- und Freizeitbereich.

Granulate aus HMW- bzw. UHMW-Polyethylen und Aluminium/Graphit-Mischungen lassen sich beispielsweise zu Produkten verarbeiten, bei denen eine verbesserte Wärmeleitfähigkeit gefordert ist. Dies ist besonders erforderlich bei hochbeanspruchten Maschinenelementen, bei denen die Reibungswärme abgeführt werden muß, z.B. Lager oder Rammhaubenfutter. Weiterhin zeigen die aus diesen Granulaten hergestellten Produkte ein verbessertes Gleitreibungsverhalten.

Die Weiterverarbeitung kann nach für den Fachmann für hohe bzw. ultrahohe Polyethylene bekannten Verarbeitungsverfahren erfolgen. Beispiele dafür sind Spritzguss, Schneckenextrusion, Ramextrusion, Pressverarbeitung und Sintern.

In den nachfolgenden Beispielen werden die Herstellung und die Eigenschaften verschiedener additivierter Granulate beispielhaft beschrieben

### Experimenteller Teil

### Verwendete Komponenten:

In Tabelle 1 sind die Eigenschaften der verwendeten UHMW-PE's dargestellt (Lieferant: Ticona GmbH, Kelsterbach, Deutschland; Handelsname: GUR®). Diese Werte wurden nach folgenden Prüfverfahren bestimmt:

| | |
|---|---|
| Dichte: | ISO 1183, Verfahren A |
| Viskositätszahl: | ISO 1628 Teil 3, Konz, in Dekahydronaphthalin: 0,0002 g/ml |
| Schüttdichte: | DIN 53 466 |
| Dehnspannung: | ISO 11542-2 |
| Kerbschlagzähigkeit: | ISO 11542 Teil 2 |
| Streckspannung: | ISO 527 Teil 1 und 2 |
| E-Modul: | ISO 527 Teil 1 und 2 |
| Spez. Oberflächenwiderstand: | ISO 291-23/50 |
| Kugeldruckhärte (30 sec Wert; Prüfkraft 358 N) | ISO 2039, Teil 1 |

Verschleiß nach dem Sand-slurry-Verfahren (relativ zu GUR 4120 = 100)

### a) Eigenschaftsbereich der verwendeten Polyethylene

**Tabelle 1**

| **Eigenschaften** | **Eigenschaftsbereich der verwendeten Polyethylene** |
|---|---|
| Dichte (g/cm³) | 0,92 bis 0,96 |
| Viskositätszahl (ml/g) | 200 bis 5000 |
| mittlere molare Masse*) (g/mol) | 1,5 * 10⁵ bis 1,5 * 10⁷ |
| Dehnspannung (MPa) | 0,1 bis 0,8 |
| Schüttdichte (g/cm³) | 0,20 bis 0,5 |
| Streckspannung (MPa) . | ≥ 17 |
| E-Modul (MPa) | 570 bis 1060 |
| Kerbschlagzähigkeit (kJ/m²) | 25 bis 250 |
| Verschleiß (nach Sand-slurry Verfahren) | 70 bis 250 |
| Spez. Oberflächenwiderstand (Ω) | > 10¹² |

| | |
|---|---|
| *) rechnerisch ermittelte molare Masse nach Margolies-Gleichung M = 5,37 ·10⁴·[η]^{1,49}; η in dl/g | |

### b) Verwendete Additive

Die in der Tabelle angegebenen Werte entsprechen denen, die der Hersteller auf seinen Datenblättern veröffentlicht hat

**Tabelle 2**

| | Ruß | Graphit | Aluminium | Wollastonit | Glaskugeln | Glasfaser |
|---|---|---|---|---|---|---|
| Form | Pulver | Pulver | Pulver | Pulver/- Granulat | Kugeln | Gemahlener Glasfaserfüllstoff |
| Farbe | schwarz | graphit- grau | grau | Weiß | Farblos | Weiß / hellgrau |
| Dichte (g/cm³) | 1,7-1,9 | 2,26 | 2,69 | 2,8-3,1 | 2,6 | 2,55-2,66 |
| Smp. (°C) | >3000 | - | 660 | 1540 | ca. 730^{*)} | ca. 840^{*)} |

| | | | | | | |
|---|---|---|---|---|---|---|
| ^{*)} Erweichungspunkt bzw. Erweichungstemperatur | | | | | | |

### Beispiele

Die Herstellung der Granulate erfolgte durch mechanisches Vermischen eines definierten UHMW-PE's mit einer bestimmten Additivkomponente in einem Schnellmischer. Diese Mischung wurde dann dem beschriebenen Extruder zugeführt.

Die Ergebnisse der Prüfung der Eigenschaften der einzelnen Granulatzusammensetzungen sind in Tabelle 3 dargestellt.

### Beispiel 1

Zusammensetzung des Granulats: 95 Gew.% GUR 4113 und 5 Gew.% Ruß

### Beispiel 2

Zusammensetzung des Granulats: 97,5 Gew.% GUR 4113 und 2,5 Gew.% Ruß

### Beispiel 3

Zusammensetzung des Granulats: 60 Gew.% GUR 2122, 30 Gew.% Aluminiumpulver und 10 Gew.% Graphit

### Beispiel 4

Zusammensetzung des Granulats: 75 Gew.% GUR 4113 und 25 Gew.% Wollastonit

### Beispiel 5

Zusammensetzung des Granulats: 95 Gew.% GUR 4113 und 5 Gew.% Mikroglaskugeln

### Beispiel 6

Zusammensetzung des Granulats: 70 Gew.% GUR 2122 und 30 Gew.% Mikroglaskugeln

### Beispiel 7

Zusammensetzung des Granulats: 70 Gew.% GUR 2122 und 30 Gew.% Mikroglasfasern

### Eigenschaften der erfindungsgemäßen Granulate

Die angegebenen Daten wurden an Probekörpern unter Laborbedingungen aus gepressten Platten ermittelt.

**Tabelle 3**

| Beispiel | Dichte (g/cm³) | Kerbschlag zähigkeit (mJ/mm²) | E-Modul (MPa) | Kugeldruckhärte (N/mm²) | Verschleiß | Oberflächen -widerstand (Ω) |
|---|---|---|---|---|---|---|
| 1 | 0,96 | 154 | 791 | 36 | 137 | 96 |
| 2 | 0,94 | 165 | 718 | 33 | 143 | 290 |
| 3 | 1,22 | 60 | 1321 | 54 | 178 | 1,5·10⁸ |
| 4 | 1,12 | 30 | 1028 | 42 | 229 | 7,6 ·10¹⁴ |
| 5 | 0,96 | 181 | 743 | 34 | 137 | 8,1 ·10¹⁴ |
| 6 | 1.12 | 43 | 868 | 40 | 210 | 2,6 ·10¹² |
| 7 | 1,15 | 82 | 1367 | 45 | 259 | 7,1 ·10¹⁴ |

## Patentansprüche

1. Verfahren zur Herstellung von Granulaten, enthaltend Polyethylen hohen und/oder ultrahohen Molekulargewichts und Füll- und/oder Verstärkungsstoffe, mit Hilfe eines Extruders, dessen Schneckenwelle in eine Einzugszone, eine Umwandlungszone und eine Ausstoßzone gegliedert ist, umfassend die Schritte:
a) Zuführen von pulverförmigem bis kleinteiligem HMW- und/oder UHMW-Polyethylen und der Füll- und/oder Verstärkungsstoffe in die Einzugszone, die ein zweigängiger Schneckenabschnitt ist, der aus einem Förderbereich, dessen Länge das 2- bis 16-fache, und einem Dekompressionsbereich, dessen Länge das 5-bis 8-fache des Schneckendurchmessers beträgt, gebildet wird, und dessen Schneckenwelle im Bereich der Einzugszone eine Gangtiefe von 4 bis 10 mm aufweist,
b) Transport des HMW- und/oder UHMW-Polyethylens und der Füll- und/oder Verstärkungsstoffe mit Hilfe der Schneckenwelle durch die Einzugszone,
c) Transport des HMW- und/oder UHMW-Polyethylens und der Füll- und/oder Verstärkungsstoffe mit Hilfe der Schneckenwelle in die Umwandlungszone, die aus einem Scherbereich besteht, dessen Länge das 1- bis 6-fache des Schneckendurchmessers beträgt und
d) Transport des HMW- und/oder UHMW-Polyethylens und der Füll- und/oder Verstärkungsstoffe mit Hilfe der Schneckenwelle in die Ausstoßzone, die einen Mischbereich umfasst, dessen Länge sich auf das 1- bis 4-fache des Schneckendurchmessers beläuft,
e) Transport des HMW- und/oder UHMW-Polyethylens und der Füll- und/oder Verstärkungsstoffe mit Hilfe der Schneckenwelle durch eine Düse vorbestimmter Geometrie unter Ausbildung mindestens eines Stranges des Extrudats, und
f) Zerkleinern mindestens einen Stranges des Extrudats
**dadurch gekennzeichnet, dass** die Schneckenwelle zumindest in der Umwandlungszone als Barriereschnecke ausgelegt ist.

2. Verfahren nach Anspruch 1, **dadurch gekennzeichnet, dass** das Polyethylen ein Polyethylen ultrahohen Molekulargewichts ist.

3. Verfahren nach Anspruch 1, **dadurch gekennzeichnet, dass** die Füll- und/oder Verstärkungsstoffe in einer Menge von bis zu 60 Gew.%, vorzugsweise 0,1 bis 40 Gew.%, bezogen auf das Granulat, vorliegen.

4. Verfahren nach Anspruch 3, **dadurch gekennzeichnet, dass** die Füll- und/oder Verstärkungsstoffe ausgewählt werden aus der Gruppe bestehend aus Farbstoffen, organischen oder anorganischen Pigmenten, Antistatika, Verstärkungsmitteln, mineralischen Füllstoffen oder synthetischen Füllstoffen.

5. Verfahren nach Anspruch 4, **dadurch gekennzeichnet, dass** die Füll- und/oder Verstärkungsstoffe ausgewählt werden aus der Gruppe bestehend aus Ruß, Graphit, Metallpulver, insbesondere Aluminiumpulver, mineralische Pulver, insbesondere Wollastonit, Verstärkungsfasern, insbesondere Glas-, Kohlenstoff- oder Metallfasern einschließlich Whiskern, oder Glaskugeln.

## Claims

1. A process for producing pelletized materials comprising high- and/or ultrahigh-molecular-weight polyethylene and fillers and/or reinforcing materials with the aid of an extruder, the sections of whose screw are a feed section, a transition section, and a metering section, encompassing the steps of:
a) introduction of pulverulent to small-particle HMW and/or UHMW polyethylene and of the fillers and/or reinforcing materials into the feed section, which is a double-flighted screw section formed from a conveying region whose length is from 2 to 16 times the screw diameter, and a decompression region whose length is from 5 to 8 times the screw diameter, the screw here having a flight depth of from 4 to 10 mm in the region of the feed section,
b) transport of the HMW and/or UHMW polyethylene and of the fillers and/or reinforcing materials through the feed section with the aid of the screw,
c) transport of the HMW and/or UHMW polyethylene and of the fillers and/or reinforcing materials with the aid of the screw into the transition section, which is composed of a shear region whose length is from 1 to 6 times the screw diameter, and
d) transport of the HMW and/or UHMW polyethylene and of the fillers and/or reinforcing materials with the aid of the screw into the metering section, which encompasses a mixing region whose length is from 1 to 4 times the screw diameter,
e) transport of the HMW and/or UHMW polyethylene and of the fillers and/or reinforcing materials with the aid of the screw through a die of predetermined geometry, forming at least one extrudate strand, and
f) comminuting at least one extrudate strand which comprises using a screw whose design, at least in the transition section, is that of a barrier screw.

2. The process as claimed in claim 1, wherein the polyethylene is an ultrahigh-molecular-weight polyethylene.

3. The process as claimed in claim 1, wherein the amounts present of the fillers and/or reinforcing materials are up to 60% by weight, preferably from 0.1 to 40% by weight, based on the pelletized material.

4. The process as claimed in claim 3, wherein the fillers and/or reinforcing materials are selected from the group consisting of dyes, organic or inorganic pigments, antistats, reinforcing agents, mineral fillers, and synthetic fillers.

5. The process as claimed in claim 4, wherein the fillers and/or reinforcing materials are selected from the group consisting of carbon black, graphite, metal powder, in particular aluminum powder, mineral powder, in particular wollastonite, reinforcing fibers, in particular glass fibers, carbon fibers, or metal fibers, including whiskers, and glass beads.

## Revendications

1. Procédé en vue de la fabrication de granulés, contenant du polyéthylène d'un poids moléculaire élevé et/ou ultra élevé et des substances de charges et/ou de renforcement, à l'aide d'une extrudeuse, dont l'arbre de vis sans fin est subdivisé en une zone d'entrée, une zone de conversion et une zone d'évacuation, comprenant les étapes :
a) d'apport de polyéthylène PME et/ou PMUE sous la forme de poudre ou sous la forme de petits fragments et des substances de charge et/ou de renforcement dans la zone d'entrée, qui est une section de vis sans fin à double pas, qui est formée d'une région de transport, dont la longueur représente de 2 à 16 fois le diamètre de la vis sans fin, et d'une région de décompression, dont la longueur représente de 5 à 8 fois le diamètre de la vis sans fin, et dont l'arbre de vis sans fin présente, dans la région de la zone d'entrée une profondeur de pas de 4 à 10 mm.
b) de transport du polyéthylène PME et/ou PMUE et des substances de charge et/ou de renforcement à l'aide de l'arbre de vis sans fin à travers la zone d'entrée,
c) de transport du polyéthylène PME et/ou PMUE et des substances de charge et/ou de renforcement à l'aide de l'arbre de vis sans fin dans la zone de conversion, qui se compose d'une région de cisaillement, dont la longueur représente de 1 à 6 fois le diamètre de la vis sans fin et
d) de transport du polyéthylène PME et/ou PMUE et des substances de charge et/ou de renforcement à l'aide de l'arbre de vis sans fin dans la zone d'évacuation, qui comprend une région de mélange, dont la longueur représente de 1 à 4 fois le diamètre de la vis sans fin,
e) de transport du polyéthylène PME et/ou PMUE et des substances de charge et/ou de renforcement à l'aide de l'arbre de vis sans fin à travers une buse d'une géométrie pré-déterminée avec formation d'au moins un boudin de l'extrudat, et
f) de fragmentation d'au moins un boudin de l'extrudat,
**caractérisé en ce que** l'arbre de vis sans fin est réalisé au moins dans la zone de conversion en tant que vis-barrière.

2. Procédé selon la revendication 1, **caractérisé en ce que** le polyéthylène est un polyéthylène d'un poids moléculaire ultra élevé.

3. Procédé selon la revendication 1, **caractérisé en ce que** les substances de charge et/ou de renforcement sont présentes dans une quantité allant jusqu'à 60 % en poids, de préférence, de 0,1 à 40 % en poids, par rapport au granulé.

4. Procédé selon la revendication 3, **caractérisé en ce que** les substances de charge et/ou de renforcement sont sélectionnées parmi le groupe se composant de colorants, de pigments organiques ou inorganiques, d'agents antistatiques, d'agents de renforcement, de charges minérales ou de charges synthétiques.

5. Procédé selon la revendication 4, **caractérisé en ce que** les substances de charge et/ou de renforcement sont sélectionnées parmi le groupe se composant du noir de fumée, du graphite, de poudre métallique, en particulier de poudre d'aluminium, de poudre minérale, en particulier de wollastonite, de fibres de renforcement, en particulier de fibres de verre, de fibres de carbone ou de fibres métalliques, y compris des barbes ou des billes de verre.
